# EUROPÄISCHE PATENTANMELDUNG

(11) **EP 4 786 111 A1**
(43) Veröffentlichungstag der Anmeldung: **05.08.2026**
(21) Anmeldenummer: 25155510.8
(22) Anmeldetag: 03.02.2025
(51) Int. Cl.: B25J 9/00, B25J 9/10

(54) **EXOSKELETT UND VERFAHREN**

(71) Anmelder: Exoiq GmbH, 21109 Hamburg (DE)
(72) Erfinder: Lügger, Johannes, 22041 Hamburg (DE); Otten, Bernward, 20099 Hamburg (DE)
(74) Vertreter: Patentanwälte Magenbauer & Kollegen Partnerschaft mbB

(57) **Zusammenfassung**

Die Erfindung betrifft ein Exoskelett (1), insbesondere Rücken-Exoskelett zur Unterstützung einer mit dem Oberkörper (3) durchgeführten Hebebewegung, umfassend einen ersten Stützabschnitt (4) zur Unterstützung eines ersten Körperteils, insbesondere des Oberkörpers (3), und einen zweiten Stützabschnitt (10) zur Abstützung des Exoskeletts (1) an einem zweiten Körperteil, insbesondere einem Bein (13), sowie eine Antriebseinrichtung zur Bereitstellung einer relativen Unterstützungs-Schwenkbewegung zwischen dem ersten Stützabschnitt (4) und dem zweiten Stützabschnitt (10), wobei das Exoskelett (1) über einen Unterstützungsmodus und einen Freilaufmodus verfügt und die Antriebseinrichtung ausgebildet ist, im Unterstützungsmodus ein Antriebsdrehmoment bereitzustellen und durch eine mechanische Drehbewegungskopplung zwischen einem Antriebselement (24) und einem Abtriebselement (25) das Antriebsdrehmoment in die relative Unterstützungs-Schwenkbewegung umzusetzen, und im Freilaufmodus die mechanische Drehbewegungskopplung zwischen dem Antriebselement (24) und dem Abtriebselement (25) in Bezug auf einen Freilauf-Winkelbereich aufzuheben, so dass innerhalb des Freilauf-Winkelbereichs eine mittels einer Benutzerkraft bewirkte relative Schwenkbewegung zwischen dem ersten Stützabschnitt (4) und dem zweite Stützabschnitt (10) ermöglicht wird, ohne dass dabei das Antriebselement (24) durch das Abtriebselement (25) in eine Drehbewegung versetzt wird.

## Beschreibung

Die Erfindung betrifft ein Exoskelett, insbesondere ein Rücken-Exoskelett zur Unterstützung einer mit dem Oberkörper durchgeführten Hebebewegung, umfassend einen ersten Stützabschnitt zur Unterstützung eines ersten Körperteils, insbesondere des Oberkörpers, und einen zweiten Stützabschnitt zur Abstützung des Exoskelett an einem zweiten Körperteil, insbesondere einem Bein, sowie eine Antriebseinrichtung zur Bereitstellung einer relativen Unterstützungs-Schwenkbewegung zwischen dem ersten Stützabschnitt und dem zweiten Stützabschnitt, wobei das Exoskelett über einen Unterstützungsmodus verfügt und die Antriebseinrichtung ausgebildet ist, im Unterstützungsmodus ein Antriebsdrehmoment bereitzustellen und durch eine mechanische Drehbewegungskopplung zwischen einem Antriebselement und einem Abtriebselement das Antriebsdrehmoment in die relative Unterstützungs-Schwenkbewegung umzusetzen.

Aus der US11759345B2 ist ein tragbares Assistenzgerät zur Unterstützung von nach vorne lehnenden Bewegungen des Oberkörpers bekannt.

Eine Aufgabe besteht darin, die Verwendung des Exoskeletts zu erleichtern.

Die Aufgabe wird gelöst durch ein Exoskelett gemäß Anspruch 1. Das Exoskelett verfügt ferner über einen Freilaufmodus, wobei die Antriebseinrichtung ausgebildet ist, im Freilaufmodus die mechanische Drehbewegungskopplung zwischen dem Antriebselement und dem Abtriebselement in Bezug auf einen Freilauf-Winkelbereich aufzuheben, so dass innerhalb des Freilauf-Winkelbereichs eine mittels einer Benutzerkraft bewirkte relative Schwenkbewegung zwischen dem ersten Stützabschnitt und dem zweite Stützabschnitt ermöglicht wird, ohne dass dabei das Antriebselement durch das Abtriebselement in eine Drehbewegung versetzt wird.

Auf diese Weise wird dem Benutzer ermöglicht, sich mit angelegtem Exoskelett derart zu bewegen, insbesondere zu gehen, dass die relative Schwenkbewegung zwischen dem ersten Stützabschnitt und dem zweiten Stützabschnitt erfolgt, ohne dabei mit seiner Benutzerkraft einen Widerstand bzw. eine Kraft überwinden zu müssen, die sich im Falle einer hergestellten mechanischen Drehbewegungskopplung zwischen dem Antriebselement und dem Abtriebselement daraus ergibt, dass aufgrund dieser Drehbewegungskopplung das Antriebselement (und dadurch beispielsweise ein Rotor eines Elektromotors) durch die relative Schwenkbewegung in die Drehbewegung versetzt wird.

Bei dieser Drehbewegung (die im Freilaufmodus vermieden werden kann) handelt es sich insbesondere um eine Drehbewegung des Antriebselements um seine eigene Drehachse, insbesondere relativ zu einem Stator des Elektromotors.

Der Benutzer wird im Freilaufmodus folglich beim Durchführen bestimmter Bewegungen, insbesondere beim Gehen, durch das Exoskelett weniger behindert, so dass die Verwendung des Exoskeletts erleichtert werden kann. Mit dem Begriff "Benutzerkraft" ist eine vom Benutzer (beispielsweise mit einem Bein) selbst ausgeübte Kraft gemeint. Mit dem Begriff "Benutzer" ist ein Benutzer gemeint, der das Exoskelett angelegt hat.

Vorteilhafte Weiterbildungen sind Gegenstand der Unteransprüche.

Die Erfindung betrifft ferner ein Verfahren zum Betrieb des Exoskeletts. Das Verfahren umfasst die Schritte: Betreiben des Exoskeletts im Unterstützungsmodus, in dem die Antriebseinrichtung das Antriebsdrehmoment bereitstellt und durch die mechanische Drehbewegungskopplung zwischen dem Antriebselement und dem Abtriebselement in die relative Unterstützungs-Schwenkbewegung umsetzt, Versetzen des Exoskeletts in den Freilaufmodus, und Betreiben des Exoskeletts im Freilaufmodus, in dem die mechanische Drehbewegungskopplung zwischen dem Antriebselement und dem Abtriebselement in Bezug auf den Freilauf-Winkelbereich aufgehoben ist, wobei innerhalb des Freilauf-Winkelbereichs die mittels der Benutzerkraft bewirkte relative Schwenkbewegung zwischen dem ersten Stützabschnitt und dem zweite Stützabschnitt durchgeführt wird, ohne dass dabei das Antriebselement durch das Abtriebselement in eine Drehbewegung versetzt wird.

Weitere exemplarische Details sowie beispielhafte Ausführungsformen werden nachstehend unter Bezugnahme auf die Figuren erläutert. Dabei zeigt
- Figur 1: ein von einem Benutzer getragenes Exoskelett in einer Seitenansicht,
- Figur 2: das von dem Benutzer getragene Exoskelett in einer Ansicht von hinten,
- Figur 3: einen Beuge-Winkel zwischen einem ersten Stützabschnitt und einem zweiten Stützabschnitt des Exoskeletts,
- Figur 4: einen Bewegungswinkelbereich zwischen zwei Winkelstellungen des zweiten Stützabschnitts,
- Figur 5: eine schematische Darstellung eines Getriebes des Exoskeletts gemäß einer ersten Ausführungsform,
- Figur 6: eine perspektivische Ansicht des Getriebes gemäß der ersten Ausführungsform,
- Figur 7: ein Abtriebselement des Getriebes gemäß der ersten Ausführungsform,
- Figur 8: ein Antriebselement des Getriebes gemäß der ersten Ausführungsform,
- Figur 9: eine perspektivische Ansicht des Getriebes gemäß der ersten Ausführungsform,
- Figur 10: eine schematische Darstellung des Getriebes gemäß einer zweiten Ausführungsform,
- Figur 11: eine weitere schematische Darstellung des Getriebes gemäß der zweiten Ausführungsform,
- Figur 12: eine perspektivische Darstellung des Getriebes gemäß der zweiten Ausführungsform in einem geöffneten Antriebseinheit-Gehäuse,
- Figur 13: eine weitere perspektivische Darstellung des Getriebes gemäß der zweiten Ausführungsform, wobei eine Spiralfeder gezeigt ist,
- Figur 14: eine weitere perspektivische Darstellung des Getriebes,
- Figur 15: eine perspektivische Darstellung des Getriebes mit einer Bremseinrichtung,
- Figur 16: eine perspektivische Darstellung des Getriebes mit einem Bewegungssensor.

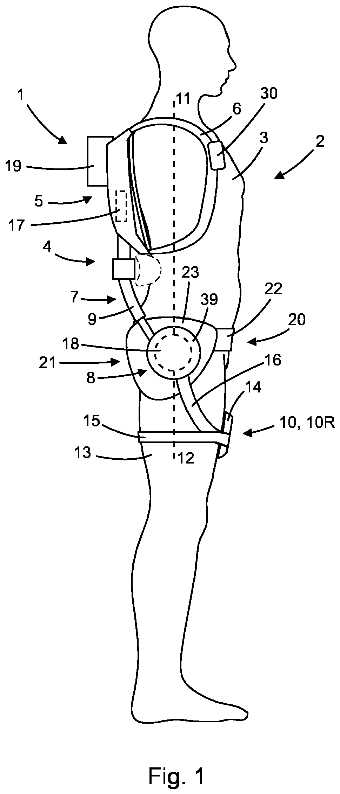

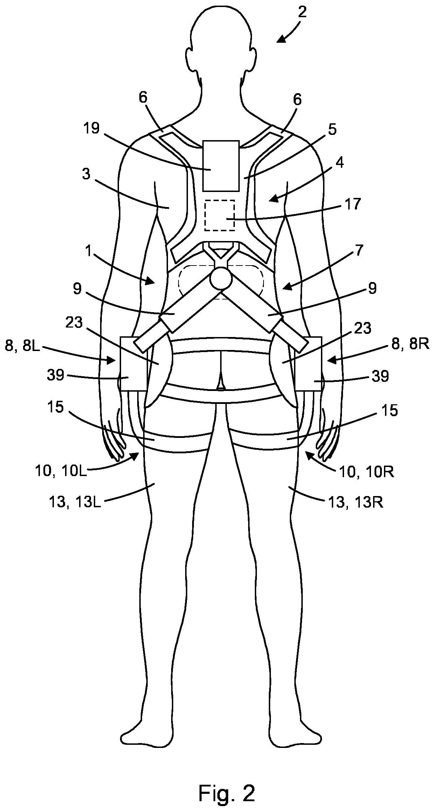

Die Figuren 1 und 2 zeigen eine exemplarische Ausgestaltung eines Exoskeletts 1, das von einem Benutzer 2 getragen wird. Mit der Formulierung, dass der Benutzer 2 das Exoskelett 1 trägt, ist gemeint, dass der Benutzer 2 das Exoskelett 1 bestimmungsgemäß angelegt hat. Das Exoskelett 1 ist exemplarisch als Rücken-Exoskelett ausgeführt.

Das Exoskelett 1 dient zur Unterstützung einer mit dem Oberkörper 3 (des Benutzers 2) durchgeführten Hebebewegung. Beispielsweise richtet der Benutzer 2 bei der Hebebewegung seinen Oberkörper 3 ausgehend von einer nach vorne geneigten Stellung hin zu einer aufrechten Stellung auf. Typischerweise hält der Benutzer 2 bei der Hebewegung ein Objekt, insbesondere ein schweres Objekt, mit seinen Händen und/oder Armen. Das Objekt soll durch die Hebebewegung nach oben bewegt werden.

Das Exoskelett 1 umfasst einen ersten Stützabschnitt 4 zur Unterstützung eines ersten Körperteils. Der erste Körperteil ist exemplarisch der Oberkörper 3. Der erste Stützabschnitt 4 ist insbesondere zur Befestigung an dem ersten Körperteil ausgebildet. Exemplarisch umfasst der erste Stützabschnitt 4 einen Rückenabschnitt 5, der dazu dient, am Rücken des Benutzers 2 getragen zu werden. Zweckmäßigerweise umfasst der erste Stützabschnitt 4 einen oder zwei Schultergurte 6 zur Befestigung des Rückenabschnitts 5 an dem Oberkörper 3. Exemplarisch verläuft jeder Schultergurt 6 von einem oberen Bereich des Rückenabschnitts 5 zu einem unteren Bereich des Rückenabschnitts 5.

Der erste Stützabschnitt 4 ist mechanisch an ein oder zwei Antriebseinheiten 8 gekoppelt. Exemplarisch verfügt das Exoskelett 1 über zwei Antriebseinheiten 8; gemäß einer alternativen Ausgestaltung kann das Exoskelett auch nur eine Antriebseinheit 8 aufweisen. Die vorliegenden Erläuterungen sollen sowohl für den Fall mit zwei Antriebseinheiten 8 als auch (in Entsprechung) für den Fall mit einer Antriebseinheit 8 gelten.

Exemplarisch umfasst der erste Stützabschnitt 4 einen ersten Kopplungsabschnitt 7, über den der Rückenabschnitt 5 mechanisch an die eine oder zwei Antriebseinheiten 8 gekoppelt ist. Exemplarisch verfügt der erste Kopplungsabschnitt 7 über zwei insbesondere längliche Kopplungselemente, die sich, ausgehend von einer horizontal mittigen Position, exemplarisch unterhalb des Rückenabschnitts 5, voneinander weg diagonal nach unten und seitlich nach außen hin zu den Antriebseinheiten 8 erstrecken. Dies ist in der Figur 2 gezeigt. Die Kopplungselemente 9 sind optional in ihrer Länge verstellbar. Der erste Kopplungsabschnitt 7, insbesondere jedes Kopplungselement 9, ist zweckmäßigerweise drehfest an einer jeweiligen Antriebseinheit 8, insbesondere einem jeweiligen Antriebseinheit-Gehäuse 39, befestigt.

Die Ausrichtung des ersten Stützabschnitts 4 soll anhand einer ersten Stützabschnitt-Achse 11 beschrieben werden. Die erste Stützabschnitt-Achse 11 entspricht insbesondere der Ausrichtung des Oberkörpers 3, an dem der erste Stützabschnitt 4 befestigt ist. In einer aufrechten Stellung des Oberkörpers 3 ist die erste Stützabschnitt-Achse 10 vertikal ausgerichtet, wie exemplarisch in der Figur 1 gezeigt.

Das Exoskelett 1 umfasst wenigstens einen zweiten Stützabschnitt 10 zur Abstützung des Exoskeletts 1 an einem zweiten Körperteil. Der zweite Stützabschnitt 10 ist insbesondere zur Befestigung an dem zweiten Körperteil ausgebildet. Der zweite Körperteil ist beispielsweise ein Bein 13 des Benutzers. Bevorzugt umfasst das Exoskelett 1 zwei zweite Stützabschnitte 10, insbesondere einen jeweiligen zweiten Stützabschnitt 10 für jedes Bein 13 des Benutzers. Die vorliegenden Erläuterungen sollen sowohl für den Fall mit zwei zweiten Stützabschnitten 10 als auch (in Entsprechung) für den Fall mit nur einem zweiten Stützabschnitt 10 gelten. Jeder zweite Stützabschnitt 10 ist zur Befestigung an einem jeweiligen Bein 13, insbesondere an einem jeweiligen Oberschenkel, des Benutzers 2 ausgebildet. Die zweiten Stützabschnitte 10 umfassen exemplarisch einen linken (zweiten) Stützabschnitt 10L für das linke Bein 13L und einen rechten (zweiten) Stützabschnitt 10R für das rechte Bein 13R. Die Begriffe "links" und "rechts" sind auf die Perspektive des Benutzers 2 bezogen.

Die zweiten Stützabschnitte 10 sind zweckmäßigerweise in Entsprechung zueinander, insbesondere spiegelsymmetrisch zueinander, ausgebildet. Exemplarisch verfügt jeder zweite Stützabschnitt 10 über eine (insbesondere gepolsterte) jeweilige Bein-Auflage 14, die (in einem getragenen Zustand des Exoskeletts 1) zweckmäßigerweise vorne auf dem jeweiligen Bein 13, insbesondere dem jeweiligen Oberschenkel, aufliegt. Exemplarisch verfügt jeder zweite Stützabschnitt 10 ferner über einen jeweiligen Beingurt 15, der, insbesondere von der jeweiligen Bein-Auflage 14 ausgehend, um das jeweilige Bein 13 verläuft (im getragenen Zustand des Exoskeletts 1).

Jeder zweite Stützabschnitt 10 ist mechanisch an eine jeweilige Antriebseinheit 8 gekoppelt. Exemplarisch umfasst jeder zweite Stützabschnitt 10 einen jeweiligen zweiten Kopplungsabschnitt 16, über den die jeweilige Bein-Auflage 14 mechanisch an eine jeweilige Antriebseinheit 8 gekoppelt ist, insbesondere drehfest an einem jeweiligen Abtriebselement 25 oder zweiten Abtriebselement 32 befestigt ist.

Die Ausrichtung jedes zweiten Stützabschnitts 10 soll anhand einer jeweiligen zweiten Stützabschnitt-Achse 12 beschrieben werden. Jede zweite Stützabschnitt-Achse 12 entspricht insbesondere der Ausrichtung des Beins 13, insbesondere Oberschenkels, an dem der jeweilige zweite Stützabschnitt 10 befestigt ist. In einer aufrechten Stellung eines Beins 13 ist die jeweilige zweite Stützabschnitt-Achse 12 vertikal ausgerichtet, wie exemplarisch in der Figur 1 gezeigt.

Das Exoskelett 1 umfasst zweckmäßigerweise einen Hüftabschnitt 20, der dazu dient, im Bereich der Hüfte 21 des Benutzers 2 befestigt zu werden. Der Hüftabschnitt 20 umfasst exemplarisch einen Hüftgurt 22, der (in einem getragenen Zustand des Exoskeletts 1) die Hüfte (und/oder die Taille) des Benutzers umschließt.

Exemplarisch verfügt der Hüftabschnitt 20 über zwei seitliche Hüftelemente 23, die (im getragenen Zustand) insbesondere im Bereich außen an den Hüftgelenken des Benutzers angeordnet sind. Exemplarisch ist an jedem Hüftelement 23 eine jeweilige Antriebseinheit 8 angeordnet.

Das Exoskelett 1 umfasst eine Antriebseinrichtung. Die Antriebseinrichtung umfasst exemplarisch die Antriebseinheiten 8 (oder nur eine Antriebseinheit 8, sofern nur eine Antriebseinheit 8 vorhanden ist). Die Antriebseinheiten 8 umfassen exemplarisch eine linke Antriebseinheit 8L und eine rechte Antriebseinheit 8R. Jede Antriebseinheit 8 verfügt über einen jeweiligen Elektromotor 18. Die Antriebseinrichtung umfasst ferner eine Steuereinheit 17 zur Ansteuerung jedes Elektromotors 18. Die Steuereinheit 17 ist insbesondere als Microcontroller ausgeführt. Die Steuereinheit 17 kann beispielsweise in dem ersten Stützabschnitt 4, insbesondere dem Rückenabschnitt 5, angeordnet sein. Alternativ kann die Steuereinheit 17 in einer Antriebseinheit 8 angeordnet sein (oder auf beide Antriebseinheiten 8 verteilt sein). Die Antriebseinrichtung umfasst zweckmäßigerweise einen Akku 19 zur Energieversorgung des Exoskeletts 1, insbesondere der Steuereinheit 17 und/oder jedes Elektromotors 18. Der Akku 19 kann beispielsweise an dem Rückenabschnitt 5 angeordnet sein oder Teil des Rückenabschnitts 5 sein. Zweckmäßigerweise erfolgt jede nachfolgend erläuterte Operation jedes Elektromotors 18 gemäß einer entsprechenden Ansteuerung durch die Steuereinheit 17.

Im getragenen Zustand des Exoskeletts 1 ist die linke Antriebseinheit 8L im linken Hüftbereich des Benutzers angeordnet und die rechte Antriebseinheit 8R im rechten Hüftbereich des Benutzers. Jede Antriebseinheit 8 verfügt zweckmäßigerweise über ein jeweiliges Antriebseinheit-Gehäuse 39, in dem insbesondere der jeweilige Elektromotor 18 angeordnet ist. Ferner verfügt jede Antriebseinheit 8 über ein jeweiliges Antriebselement 24 und ein jeweiliges Abtriebselement 25, die insbesondere im jeweiligen Antriebseinheit-Gehäuse 39 angeordnet sind und beispielsweise Teil eines jeweiligen Getriebes bilden.

Die Antriebseinrichtung dient dazu, eine relative Unterstützungs-Schwenkbewegung zwischen dem ersten Stützabschnitt 4 und jedem zweiten Stützabschnitt 10 bereitzustellen. Exemplarisch dient die Antriebseinrichtung dazu (mittels der linken Antriebseinheit 8L) eine erste relative Unterstützungs-Schwenkbewegung zwischen dem ersten Stützabschnitt 4 und dem linken zweiten Stützabschnitt 10 bereitzustellen und (mittels der rechten Antriebseinheit 8R) eine zweite relative Unterstützungs-Schwenkbewegung zwischen dem ersten Stützabschnitt 4 und dem rechten zweiten Stützabschnitt 10 bereitzustellen. Mit dem Begriff "relative Unterstützungs-Schwenkbewegung" ist insbesondere die erste relative Schwenkbewegung und/oder die zweite relative Schwenkbewegung gemeint.

Das Exoskelett 1 verfügt über einen Unterstützungsmodus. Die Antriebseinrichtung ist ausgebildet, im Unterstützungsmodus ein Antriebsdrehmoment bereitzustellen und durch eine mechanische Drehbewegungskopplung zwischen einem Antriebselement 24 und einem Abtriebselement 25 das Antriebsdrehmoment in die relative Unterstützungs-Schwenkbewegung umzusetzen. Das Antriebselement 24 und das Abtriebselement 25 werden nachfolgend noch näher erläutert. Das Antriebselement 24 und das Abtriebselement 25 sind zweckmäßigerweise Teil der Antriebseinrichtung, beispielsweise Teil eines Getriebes der Antriebseinrichtung. Das Antriebsdrehmoment wird zweckmäßigerweise mittels eines jeweiligen Elektromotors 18 bereitgestellt. Mit der Formulierung "mechanische Drehbewegungskopplung zwischen einem Antriebselement 24 und einem Abtriebselement 25" ist gemeint, dass eine Drehbewegung des Antriebselements 24 mechanisch in eine Drehbewegung des Abtriebselements 25 umgesetzt wird, und umgekehrt eine Drehbewegung des Abtriebselements 25 mechanisch in eine Drehbewegung des Antriebselements 24 umgesetzt wird.

Bei der vorliegenden exemplarischen Ausgestaltung mit zwei Antriebseinheiten 8 stellt im Unterstützungsmodus jeder Elektromotor 18 ein jeweiliges Antriebsdrehmoment bereit, das in der jeweiligen Antriebseinheit 8 über die jeweilige mechanische Drehbewegungskopplung zwischen dem jeweiligen Antriebselement 24 und dem jeweiligen Abtriebselement 25 in die jeweilige relative Unterstützungs-Schwenkbewegung umgesetzt wird.

Die beiden Antriebseinheiten 8L, 8R sind in Entsprechung zueinander, insbesondere funktional identisch, ausgeführt. Optional sind die beiden Antriebseinheiten 8L, 8R strukturell spiegelsymmetrisch zueinander ausgeführt. Erläuterungen, die sich auf eine Antriebseinheit 8 (oder deren Komponenten) beziehen, gelten zweckmäßigerweise jeweils für jede der beiden Antriebseinheiten 8L und 8R (bzw. für deren Komponenten). Ebenso sollen Erläuterungen, die sich auf einen zweiten Stützabschnitt 10 beziehen, zweckmäßigerweise jeweils für jeden der beiden zweiten Stützabschnitte 10L und 10R gelten.

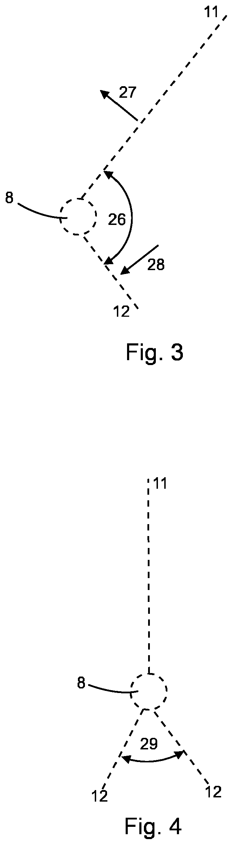

Der Unterstützungsmodus soll anhand der Figur 3 näher erläutert werden. Die Stützabschnitt-Achsen 11, 12 sind hier in der Seitenansicht (wie in der Figur 1) gezeigt. Der Benutzer 2 hat seinen Oberkörper 3 nach vorne gebeugt; dementsprechend ist die erste Stützabschnitt-Achse 11 nach vorne geneigt; verläuft also in einer vertikalen Ebene diagonal nach vorne und oben, ausgehend von der Antriebseinheit 8. Exemplarisch nimmt der Benutzer 3 ferner eine Hocke ein, so dass die zweiten Stützabschnitt-Achsen 12 (entsprechend der Ausrichtung der Oberschenkel) nach vorne geneigt sind, und dementsprechend in der vertikalen Ebene diagonal nach vorne und unten verlaufen, ausgehend von der Antriebseinheit 8. Diese Stellung des Exoskeletts 1 bzw. Benutzers 2 soll als gebeugte Stellung bezeichnet werden.

Der Winkel zwischen der ersten Stützabschnitt-Achse 11 und den zweiten Stützabschnitt-Achsen 12 soll als Beuge-Winkel 26 bezeichnet werden. Der Beuge-Winkel 26 ist geringer als 180 Grad und vorzugsweise größer als 50 Grad. Beispielsweise beträgt der Beuge-Winkel 26 in der gebeugten Stellung zwischen 70 und 120 Grad. Bei der vorliegenden Ausgestaltung mit zwei zweiten Stützabschnitten 10 gibt es für jeden zweiten Stützabschnitt 10 einen eigenen Beuge-Winkel (relativ zum ersten Stützabschnitt 4). Die vorliegenden Erläuterungen, die sich auf den Beuge-Winkel 26 beziehen, sollen zweckmäßigerweise für beide Beuge-Winkel gelten. Die beiden zweiten Stützabschnitt-Achsen 12 können die gleiche oder zueinander unterschiedliche Ausrichtungen haben; im letzteren Fall unterscheiden sich die Beuge-Winkel voneinander.

Im Unterstützungsmodus ist jeder Elektromotor 18 aktiv und stellt ein jeweiliges Antriebsdrehmoment bereit. Beispielsweise ist ein jeweiliger Stator jedes Elektromotors 18 drehfest mit dem ersten Stützabschnitt 4 gekoppelt, beispielsweise über das jeweilige Antriebseinheit-Gehäuse 39. Der jeweilige Rotor jedes Elektromotors 18 treibt das jeweilige Antriebselement 24 gemäß dem Antriebsdrehmoment an. Optional kann das Antriebselement 24 der Rotor oder Teil des Rotors sein. Das jeweilige Antriebselement 24 treibt (über die mechanische Drehbewegungskopplung) das jeweilige Abtriebselement 25 an. Über die Drehbewegung des jeweiligen Abtriebselement 25 wird der jeweilige zweite Stützabschnitt 10 relativ zum ersten Stützabschnitt 4 verschenkt, wodurch die jeweilige relative Unterstützungs-Schwenkbewegung bewirkt wird.

Jeder zweite Stützabschnitt 10 stützt sich auf dem jeweiligen Oberschenkel ab, so dass die jeweilige relative Unterstützungs-Schwenkbewegung dazu führt, dass der erste Stützabschnitt 4 (mit seiner ersten Stützabschnitt-Achse 11) in Richtung zu einer aufrechten (insbesondere vertikalen) Ausrichtung verschwenkt wird. Der Beuge-Winkel 26 vergrößert sich.

Das von jedem Elektromotor 18 bereitgestellte jeweilige Antriebsdrehmoment wird in eine Unterstützungskraft, insbesondere eine Zugkraft 27, umgesetzt, die über den ersten Stützabschnitt 4 auf den Oberkörper 3 wirkt; die zweiten Stützabschnitte 10 leiten eine dieser Unterstützungskraft korrespondierende Gegenkraft 28 in die Oberschenkel des Benutzers ein. Durch die vom Exoskelett 1 bereitgestellte Unterstützungskraft wird der Oberkörper 3 des Benutzers bei einer Hebebewegung unterstützt und somit insbesondere der Rücken des Benutzers entlastet.

Optional kann das Exoskelett 1 im Unterstützungsmodus dazu dienen, den Benutzer in einer statischen gebeugten Stellung mit der Unterstützungskraft zu unterstützen (ohne dass eine Unterstützungs-Schwenkbewegung durchgeführt wird).

Im vorliegenden Beispiel sind zwei Antriebseinheiten 8, also insbesondere zwei Elektromotoren 18, bzw. zwei (separate) zweite Stützabschnitte 10 vorhanden. Wie vorstehend bereits erwähnt kann das Exoskelett 1 gemäß einer alternativen Ausgestaltung auch nur mit einer Antriebseinheit 8, insbesondere nur einem Elektromotor 18, und/oder nur einem zweiten Stützabschnitt 10 ausgeführt sein. In diesem Fall gelten die vorliegenden Erläuterungen in Entsprechung für die eine Antriebseinheit 8, insbesondere den einen Elektromotor 18, und/oder den einen zweiten Stützabschnitt 10.

Das Exoskelett 1 verfügt ferner über einen Freilaufmodus. Die Antriebseinrichtung ist ausgebildet, im Freilaufmodus die mechanische Drehbewegungskopplung zwischen dem Antriebselement 24 und dem Abtriebselement 25 in Bezug auf einen Freilauf-Winkelbereich aufzuheben, so dass innerhalb des Freilauf-Winkelbereichs eine mittels einer Benutzerkraft bewirkte relative Schwenkbewegung zwischen dem ersten Stützabschnitt 4 und dem zweite Stützabschnitt 10 ermöglicht wird, ohne dass dabei das Antriebselement 24 durch das Abtriebselement 25 in eine Drehbewegung versetzt wird. Die mechanische Drehbewegungskopplung ist im Freilaufmodus für den gesamten Freilauf-Winkelbereich aufgehoben. Der Freilauf-Winkelbereich beträgt beispielsweise mindestens 20 Grad und/oder maximal 40 Grad oder 50 Grad.

Im Freilaufmodus ist zweckmäßigerweise bei der jeweiligen Antriebseinheit 8 die jeweilige mechanische Drehbewegungskopplung zwischen dem jeweiligen Antriebselement 24 und dem jeweiligen Abtriebselement 25 in Bezug auf einen jeweiligen Freilauf-Winkelbereich aufgehoben, so dass innerhalb des jeweiligen Freilauf-Winkelbereichs eine mittels einer Benutzerkraft bewirkte jeweilige relative Schwenkbewegung zwischen dem ersten Stützabschnitt 4 und dem jeweiligen zweite Stützabschnitt 10 ermöglicht wird, ohne dass dabei das jeweilige Antriebselement 24 durch das jeweilige Abtriebselement 25 in eine Drehbewegung versetzt wird. Die durch die Benutzerkraft bewirkte jeweilige relative Schwenkbewegung wird insbesondere durch ein Gehen des Benutzers verursacht. Die jeweilige Benutzerkraft wird durch das jeweilige Bein auf den jeweiligen zweiten Stützabschnitt 10 aufgebracht.

Im Freilaufmodus wird von dem Elektromotor 18 kein Antriebsdrehmoment bereitgestellt, oder es wird kein von dem Elektromotor 18 stammendes Antriebsdrehmoment von dem Antriebselement 24 zu dem Abtriebselement 25 übertragen. Beispielsweise ist im Freilaufmodus der Elektromotor 18, insbesondere beide Elektromotoren 18, abgeschaltet. Alternativ kann im Freilaufmodus jeder Elektromotor 18 so angesteuert werden, dass sich das jeweilige Antriebselement 24 gemäß dem jeweiligen Abtriebselement 25 bewegt, um eine Kraft- oder Drehmomentübertragung von dem Abtriebselement 25 auf das Antriebselement 24 zu verhindern und/oder um zu verhindern, dass die mechanische Drehbewegungskopplung hergestellt wird.

Bei einem Wechsel von dem Unterstützungsmodus in den Freilaufmodus kann das von dem Elektromotor 18 bereitgestellte Antriebsdrehmoment graduell verringert werden, insbesondere bis auf null. Bei einem Wechsel von dem Freilaufmodus in den Unterstützungsmodus kann das Antriebsdrehmoment graduell erhöht werden, insbesondere ausgehend von null. Insbesondere kann eine Regelung des Drehmoments erfolgen, beispielsweise indirekt über ein Stromregelung. Auf diese Weise kann ein sanfter Anlauf gewährleistet werden.

Anhand der Figur 4 soll der Freilaufmodus näher erläutert werden. Die Stützabschnitt-Achsen 11, 12 sind hier in der Seitenansicht (wie in der Figur 3) gezeigt. Die Erläuterungen beziehen sich auf einen zweiten Stützabschnitt 10 bzw. eine Antriebseinheit 8, sollen aber zweckmäßigerweise in Entsprechung für jeden der beiden Stützabschnitte 10 bzw. für jede der beiden Antriebseinheiten 8 gelten, sofern zwei Stützabschnitte 10 bzw. zwei Antriebseinheiten 8 vorhanden sind.

Im Freilaufmodus soll der zweite Stützabschnitt 10 mittels der Benutzerkraft innerhalb eines Bewegungswinkelbereichs 29 bewegt werden. Der erste Stützabschnitt 4 wird dabei nicht oder weniger oder anders bewegt als der zweite Stützabschnitt 10, so dass eine relative Schwenkbewegung zwischen dem ersten Stützabschnitt 4 und dem zweiten Stützabschnitt 10 erfolgt.

Beispielsweise geht der Benutzer 2 einen oder mehrere Schritte mit angelegtem Exoskelett. Der Oberkörper 3 des Benutzers 2 verbleibt dabei im Wesentlichen in einer aufrechten Haltung (wie in der Figur 4 anhand der ersten Stützabschnitt-Achse 11 gezeigt), während der zweite Stützabschnitt 10 bei jedem Schritt den Bewegungswinkelbereich 29 durchläuft. Der zweite Stützabschnitt 10 wird dabei durch eine Benutzerkraft - exemplarisch durch eine mit dem Oberschenkel bereitgestellte Kraft - bewegt. Der Bewegungswinkelbereich 29 beträgt beispielsweise zwischen 20 und 40 Grad. Gemäß einer möglichen Ausgestaltung ist der Freilauf-Winkelbereich gleich dem Bewegungswinkelbereich 29.

Dadurch, dass im Freilaufmodus die mechanische Drehbewegungskopplung zwischen dem Antriebselement 24 und dem Abtriebselement 25 in Bezug auf den Freilauf-Winkelbereich aufgehoben ist, kann der Benutzer diese den Bewegungswinkelbereich 29 durchlaufende Bewegung - exemplarisch den einen oder die mehreren Schritte - durchführen, ohne dass dabei das Antriebselement 24 (und dadurch beispielsweise der Rotor des Elektromotors 18) durch das Abtriebselement 25 in Drehbewegung versetzt werden. Somit ist im Freilaufmodus die mit dem zweiten Stützabschnitt 10 durchgeführte Bewegung für den Benutzer leichter - also mit weniger Kraftaufwand - durchführbar, da der Benutzer dabei das Antriebselement 24 bzw. den Rotor des Elektromotors 18 nicht in eine Drehbewegung versetzen muss.

Wie bereits erwähnt ist das Exoskelett 1 insbesondere ein Rücken-Exoskelett, der erste Stützabschnitt 4 dient zur Unterstützung des Oberkörpers 3 und der zweite Stützabschnitt 10 dient zur Abstützung an einem Bein 13. Der Freilauf-Winkelbereich ist derart ausgelegt, dass der Benutzer 2 des Rücken-Exoskeletts im Freilauf-Modus mit wenigstens einem Bein 13 einen kompletten Schrittzyklus durchführen kann, ohne dass dabei aufgrund einer durch den Schrittzyklus bewirkten relativen Schwenkbewegung zwischen dem ersten Stützabschnitt 4 und dem zweiten Stützabschnitt 10 das Antriebselement 24 durch das Abtriebselement 25 in eine Drehbewegung versetzt wird. Als kompletter Schrittzyklus soll insbesondere die den Bewegungswinkelbereich 29 durchlaufende Bewegung des Oberschenkels (bzw. der zweiten Stützabschnitt-Achse 12) bezeichnet werden, beispielsweise ausgehend von einer bei der Bewegung maximal nach vorne geneigten Stellung des Oberschenkels zu einer maximal nach hinten geneigten Stellung des Oberschenkels zurück zu der maximal nach vorne geneigten Stellung des Oberschenkels.

Bevorzugt ist das Abtriebselement 25 in eine Freilauf-Stellung versetzbar, um dadurch die Drehbewegungskopplung in Bezug auf den Freilauf-Winkelbereich aufzuheben (und so das Exoskelett 1 in den Freilaufmodus zu versetzen). Das Abtriebselement 25 ist zweckmäßigerweise durch eine mittels einer Benutzerkraft bewirkte relative Schwenkbewegung zwischen dem ersten Stützabschnitt 4 und dem zweite Stützabschnitt 10 in die Freilauf-Stellung versetzbar.

Gemäß einer möglichen Ausgestaltung ist das Exoskelett 1 ausgebildet, zu detektieren, ob eine dem Unterstützungsmodus oder dem Freilaufmodus zugeordnete Anwendungssituation vorliegt und auf Basis dieser Detektion die Bereitstellung des Antriebsdrehmoments zu steuern. Beispielsweise detektiert das Exoskelett 1 mittels einer entsprechenden Sensorik, beispielsweise eines oder mehrerer Beschleunigungssensoren und/oder eines oder mehrere Drehratensensoren, eine oder mehrere absolute und/oder relative Ausrichtungen des ersten Stützabschnitts 4 und/oder eines oder beider zweiten Stützabschnitte 10, und/oder eine oder mehrere Bewegungen und/oder Bewegungsmuster des ersten Stützabschnitts 4 und/oder eines oder beider zweiten Stützabschnitte 10.

Beispielsweise detektiert das Exoskelett 1 in Ansprechen darauf, dass die erste Stützabschnitt-Achse 11 und die zweite Stützabschnitt-Achse 12 wie in der Figur 3 gezeigt nach vorne geneigt sind und die beiden zweiten Stützabschnitte 10 im Wesentlichen stationär sind und/oder im Wesentlichen die gleiche Ausrichtung aufweisen, dass eine dem Unterstützungsmodus zugeordnete Anwendungssituation vorliegt und stellt in Ansprechen darauf das Antriebsdrehmoment mittels eines oder beider Elektromotoren 18 bereit.

Ferner kann das Exoskelett 1 in Ansprechen darauf, dass die zweite Stützabschnitt-Achse 12 im Wesentlichen vertikal ausgerichtet ist, detektieren, dass eine dem Freilaufmodus zugeordnete Anwendungssituation vorliegt, und in Ansprechen darauf die Bereitstellung des Antriebsdrehmoments deaktivieren.

Optional kann der Benutzer manuell einstellen, ob das Antriebsdrehmoment bereitgestellt wird, beispielsweise mittels einer Bedieneinrichtung 30 des Exoskeletts 1, die beispielsweise an einem Schultergurt 6 angeordnet sein kann.

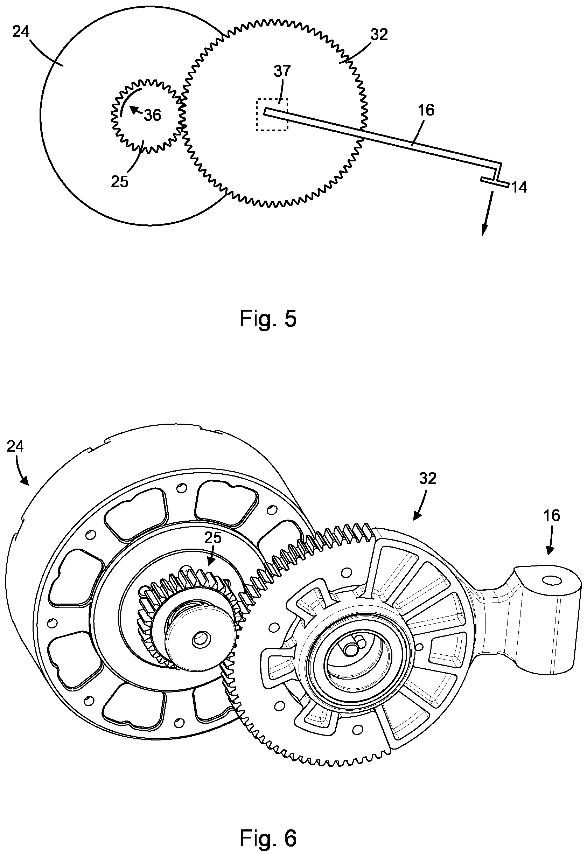

Im Folgenden soll unter Bezugnahme auf die Figuren 5 bis 9 auf eine exemplarische erste Ausführungsform eingegangen werden, bei der der erste Stützabschnitt 4 und der zweite Stützabschnitt 10 insbesondere über ein Zahnradgetriebe miteinander gekoppelt sind. Die folgenden Erläuterungen gelten zweckmäßigerweise für jede der beiden Antriebseinheiten 8 bzw. jeden der beiden Stützabschnitte 10.

Das Antriebselement 24 ist exemplarisch Teil des Rotors des Elektromotors 18 (oder stellt den Rotor des Elektromotors 18 dar) oder ist drehfest mit dem Rotor des Elektromotors 18 gekoppelt. Wie in den Figuren 6, 8 und 9 gezeigt, hat das Antriebselement 24 exemplarisch eine kreiszylindrische Grundgestalt. Das Abtriebselement 25 ist ein erstes Abtriebselement und ist exemplarisch als erstes Zahnrad ausgeführt. Das erste Abtriebselement 25 ist zweckmäßigerweise koaxial zum Antriebselement 24 angeordnet. Die Antriebseinrichtung, insbesondere die Antriebseinheit 8, umfasst ferner ein zweites Abtriebselement 32, das exemplarisch als zweites Zahnrad ausgeführt ist, und insbesondere in dem Antriebseinheit-Gehäuse 39 angeordnet ist. Insbesondere umfasst jede Antriebseinheit 8 ein jeweiliges zweites Abtriebselement 32. Das zweite Abtriebselement 32 ist direkt neben dem ersten Abtriebselement 25 angeordnet, wobei die Drehachsen des ersten Abtriebselements 25 und des zweiten Abtriebselements 32 parallel zueinander ausgerichtet sind.

Die Figur 5 zeigt schematisch das Zusammenspiel zwischen dem Antriebselement 24, dem Abtriebselement 25 (das hier auch als erstes Abtriebselement bezeichnet werden soll), dem zweiten Abtriebselement 32, dem zweiten Kopplungsabschnitt 16 und der Bein-Auflage 14. Das Antriebselement 24 treibt das erste Abtriebselement 25 rotativ an. Das erste Abtriebselement 25 und das zweite Abtriebselement 32 stehen in Eingriff miteinander und bilden exemplarisch ein Zahnradgetriebe. Insbesondere greift die auf dem Umfang des ersten Abtriebselements 25 vorhandene Verzahnung in die auf dem Umfang des zweiten Abtriebselements 32 vorhandene Verzahnung ein. Der zweite Kopplungsabschnitt 16 ist drehfest an dem zweiten Abtriebselement 32 befestigt. Die Bein-Auflage 14 ist an dem zweiten Kopplungsabschnitt 16 befestigt.

Vorzugsweise bilden das erste Abtriebselement 25 und das zweite Abtriebselement 32 eine Untersetzung. Das zweite Abtriebselement 32 hat vorzugsweise einen größeren Durchmesser als das erste Abtriebselement 25.

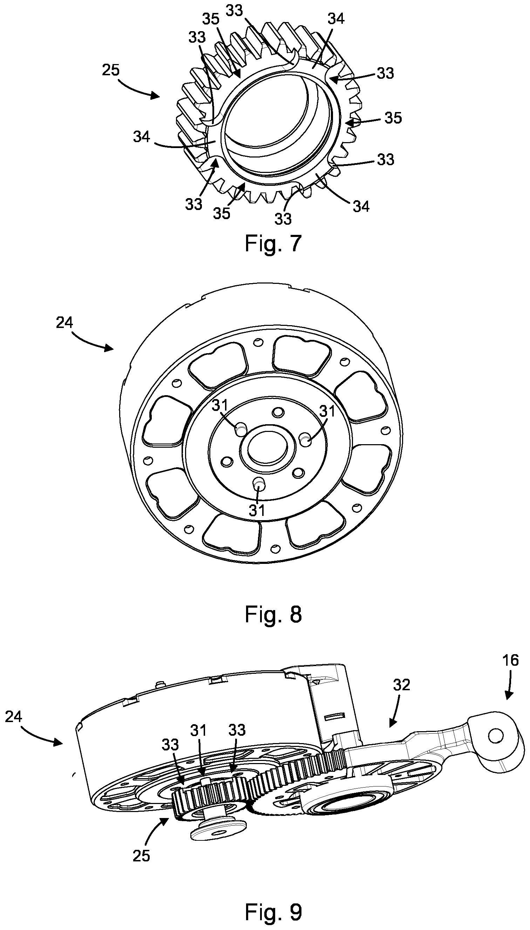

Exemplarisch bilden das Antriebselement 24 und das Abtriebselement 25 zusammen eine mechanische Kupplung, die wenigstens einen Eingriffsabschnitt 31 und wenigstens zwei Endanschläge 33 umfasst. Der Eingriffsabschnitt 31 ist z.B. in der Figur 8 gezeigt und die Endanschläge 33 in der Figur 7.

Exemplarisch ist der Eingriffsabschnitt 31 Teil des Antriebselements 24. Insbesondere ist der Eingriffsabschnitt 31 ein an einer Stirnfläche des Antriebselements 24 angeordneter, insbesondere zylindrischer, Vorsprung, beispielsweise ein Zapfen. Als Stirnfläche soll diejenige Fläche bezeichnet werden, die senkrecht zu der Drehachse des Antriebselements 24 ausgerichtet ist. Exemplarisch verfügt das Antriebselement 24 über mehrere, insbesondere drei, Eingriffsabschnitte 31, die insbesondere auf einer gedachten Kreisbahn angeordnet sind. Die gedachte Kreisbahn verläuft konzentrisch zur Drehachse des Antriebselements 24.

Die Endanschläge 33 sind exemplarisch Teil des Abtriebselements 25. Zweckmäßigerweise werden die Endanschläge 33 durch zwei an der Stirnfläche des Abtriebselements 25 angeordnete Erhebungen 34 gebildet. Die Stirnfläche ist senkrecht zu der Drehachse des Abtriebselements 25 ausgerichtet. Die Erhebungen 34 erheben sich in Axialrichtung der Drehachse. Exemplarisch sind drei Erhebungen 34 vorhanden, die insbesondere auf einer gedachten Kreisbahn angeordnet sind, die konzentrisch zur Drehachse des Abtriebselements 25 verläuft. Jede Erhebung 34 stellt zwei Endanschläge 33 bereit.

Gemäß einer alternativen Ausgestaltung sind die Eingriffsabschnitte 31 Teils des Abtriebselements 25 und die Endanschläge 33 Teil des Antriebselements 24.

Zwischen zwei (benachbarten) Endanschlägen 33 (die insbesondere von verschiedenen Erhebungen 34 bereitgestellt werden) ist jeweils eine Kreisbogenbahn 36 definiert, entlang der der Eingriffsabschnitt 31 relativ zu den Endanschlägen 33 bewegbar ist. Exemplarisch ist in Umfangsrichtung zwischen zwei benachbarten Erhebungen 34 eine Eingriffsabschnitt-Tasche 35 vorhanden, in dem sich ein jeweiliger Eingriffsabschnitt 31 befindet (wie z.B. in der Figur 9 zu sehen), der sich bei einer relativen Drehbewegung zwischen dem Antriebselement 24 und dem Antriebselement 25 von einem Endanschlag 33 zu einem benachbarten Endanschlag 33 bewegen kann.

Die Eingriffsabschnitt-Taschen 35 sind zweckmäßigerweise bogenförmig. Jede Eingriffsabschnitt-Tasche 35 definiert eine jeweilige Kreisbogenbahn 36 und damit den Freilauf-Winkelbereich. Die Summer der Bogenwinkel aller Eingriffsabschnitt-Taschen 35 ist kleiner als 360°.

Zweckmäßigerweise ist jeder Eingriffsabschnitt 31 in einer jeweiligen Eingriffsabschnitt-Tasche 35 angeordnet und kann sich dort zwischen den jeweiligen zwei benachbarten Erhebungen 34 auf einer jeweiligen Kreisbogenbahn 36 bewegen.

Die folgenden, auf einen Eingriffsabschnitt 31 gerichteten Erläuterungen gelten zweckmäßigerweise für sämtliche Eingriffsabschnitte 31 (sofern mehrere Eingriffsabschnitte 31 vorhanden sind).

Die Kupplung (aus dem Antriebselement 24 und dem ersten Abtriebselement 25) ist in einen Übertragungszustand versetzbar, in dem der Eingriffsabschnitt 31 in Eingriff mit dem einen oder dem anderen der beiden Endanschläge 33 steht, um die Drehbewegungskopplung bereitzustellen. Im Unterstützungsmodus liegt der Übertragungszustand vor. Die Antriebseinrichtung ist ausgebildet, im Unterstützungsmodus die Unterstützungs-Schwenkbewegung dadurch bereitzustellen, dass das Antriebsdrehmoment mittels der mechanischen Kupplung von dem Antriebselement 24 auf das erste Abtriebselement 25 übertragen wird und durch den Eingriff des ersten Abtriebselements mit dem zweiten Abtriebselement in die Unterstützungs-Schwenkbewegung umgesetzt wird.

Die Kupplung ist ferner in einen Freilaufzustand versetzbar, in dem der Eingriffsabschnitt 31 von beiden (diesem Eingriffsabschnitt 31 zugeordneten) Endanschlägen 33 beabstandet und entlang der Kreisbogenbahn 36 bewegbar ist, um die mechanische Drehbewegungskopplung zwischen dem Antriebselement 24 und dem Abtriebselement 25 in Bezug auf den Freilauf-Winkelbereich aufzuheben. Als zugeordnete Endanschläge 33 sollen die beiden Endanschläge bezeichnet werden, die die Kreisbogenbahn 36 des Eingriffsabschnitts 31 begrenzen. Der Freilaufzustand ist beispielsweise in der Figur 9 gezeigt. Der Freilauf-Winkelbereich ist durch die Länge der Kreisbogenbahn 36 definiert. Insbesondere entspricht der Freilauf-Winkelbereich demjenigen Winkelbereich, über den sich die Kreisbogenbahn 36 erstreckt. Innerhalb dieses Freilauf-Winkelbereichs kann das erste Abtriebselement 25 rotativ bewegt werden (durch eine entsprechende Bewegung des zweiten Stützabschnitts 10, die über das zweite Abtriebselement 32 auf das erste Abtriebselement 25 übertragen wird), ohne dass das Antriebselement 24 durch das erste Abtriebselement 25 in eine rotative Bewegung versetzt wird.

Der Benutzer kann die Kupplung insbesondere dadurch in einen Freilaufzustand versetzen, dass er mittels seiner Benutzerkraft eine oder zwei relative Schwenkbewegungen zwischen dem ersten Stützabschnitt 4 und dem zweiten Stützabschnitt 10 durchführt, beispielsweise erst in eine Richtung und dann in die entgegengesetzte Richtung. In dem Beispiel der Figur 4 kann der Benutzer 2 die Kupplung dadurch in den Freilaufzustand versetzen, dass der Benutzer 2 sein entsprechendes Bein 13 nach hinten bewegt, so dass der daran befestigte zweite Stützabschnitt 10 mit seiner zweiten Stützabschnitt-Achse 12 die innerhalb des Bewegungswinkelbereichs 29 maximal nach hinten geneigte Stellung einnimmt, und danach das Bein (beispielsweise um die Hälfte des Freilauf-Winkelbereichs) nach vorne bewegt. Beispielsweise wird der zweite Stützabschnitt 10 und das mit ihm fest verbundene zweite Abtriebselement 32 durch eine Gehbewegung des Benutzers bewegt, so dass eine Drehbewegung des ersten Abtriebselements 25 erfolgt. Die Eingriffsabschnitt-Taschen 35 drehen sich derart relativ zu den Eingriffsabschnitten 31, dass die Endanschläge 33 die Eingriffsabschnitte 31 des Antriebselements 24 nicht berühren. Der Benutzer des Exoskeletts spürt keinen Widerstand bei Ausführung der Gehbewegung.

Ist bei einer Gehbewegung des Benutzers ein Eingriff der Endanschläge 33 mit den Eingriffsabschnitten 31 gegeben, erfolgt dadurch eine Drehbewegung des Antriebselements 24. Der Benutzer spürt einmalig einen Widerstand. Bei wiederholter, gleicher Betätigung des zweiten Stützabschnitts 10 spürt der Benutzer keinen weiteren Widerstand, da die Drehung des ersten Abtriebselements 25 jetzt zweckmäßigerweise ausschließlich im Winkelbereich der Eingriffsabschnitt-Taschen 35 bzw. im Freilauf-Winkelbereich erfolgt.

Gemäß einer möglichen Ausgestaltung kann der Freilaufzustand durch das Exoskelett 1 selbständig eingenommen werden, indem der Elektromotor 18 das Antriebselement 24 so dreht, dass der Eingriffsabschnitt 31 an keinem Endanschlag 33 anliegt, also beabstandet zu den jeweils zugeordneten Endanschlägen 33 ist.

Exemplarisch weist das zweite Zahnrad nur entlang eines Kreisbogens - also nur eines Teils seines Umfangs - eine Verzahnung auf, so dass nur innerhalb des Winkelbereichs dieses Kreisbogens die Umsetzung des Antriebsdrehmoments in die Unterstützungs-Schwenkbewegung erfolgt. Dies ist z.B. in der Figur 6 gezeigt, wo sich die Zähne des zweiten Abtriebselements 32 nur über etwas mehr als die Hälfte des Umfangs des zweiten Abtriebselemeents 32 erstrecken - exemplarisch über einen Winkelbereich von mindestens 180 Grad und/oder maximal 230 Grad. Der Winkelbereich kann beispielsweise dem typischen Bewegungsumfang des menschlichen Beins bei den zu unterstützenden Arbeitstätigkeiten entsprechen. Auf diese Weise kann Gewicht und Bauraum eingespart werden. Außerdem kann so zur Erhöhung der Sicherheit der Bewegungsbereich des Exoskeletts 1 auf den Bewegungsbereich der menschlichen Gelenke begrenzt werden. Dies kann eine Überstreckung von Gliedmaßen im Falle einer Fehlfunktion verhindern.

Bevorzugt verfügt das Exoskelett 1 über eine Sensoreinrichtung 37, beispielsweise einen Drehwinkelsensor, zur Erfassung einer Drehbewegung des zweiten Abtriebselements 32. Die Antriebseinrichtung ist vorzugsweise ausgebildet, im Freilauf-Modus das Antriebselement 24 auf Basis der erfassten Drehbewegung (mittels des Elektromotors 18) anzutreiben, derart, dass der Eingriffsabschnitt 31 auf Abstand zu den Endanschlägen 33 gehalten wird. Auf diese Weise kann ein Bewegungswinkelbereich 29 erzielt werden, der größer ist als der Freilauf-Winkelbereich. Die Erfassung der Drehbewegung und Ansteuerung des Elektromotors 18 erfolgt durch die Steuereinheit 17. Insbesondere wird durch ein Gehen des Benutzers eine periodische Drehbewegung des ersten Abtriebselements 25 erzeugt, bei der sich das erste Abtriebselement 25 abwechselnd in eine erste Richtung und in eine der ersten Richtung entgegengesetzte Richtung dreht. Die Steuereinheit 17 erfasst über die Sensoreinrichtung 37 diese Drehbewegung des ersten Abtriebselements 25 und steuert den Elektromotor 18 so an, dass dieser das Antriebselement 24 in eine korrespondierende periodische Drehbewegung versetzt, so dass der Eingriffsabschnitt 31 auf Abstand zu den zugeordneten Endanschlägen 33 gehalten wird. Insbesondere erfolgt die Ansteuerung des Elektromotors 18 derart, dass die Eingriffsabschnitte 31 konstant in der Winkelhalbierenden bzw. der Mitte des Bogenwinkels der Kreisbogenbahnen 36 bzw. der Eingriffsabschnitt-Taschen 35 gehalten werden.

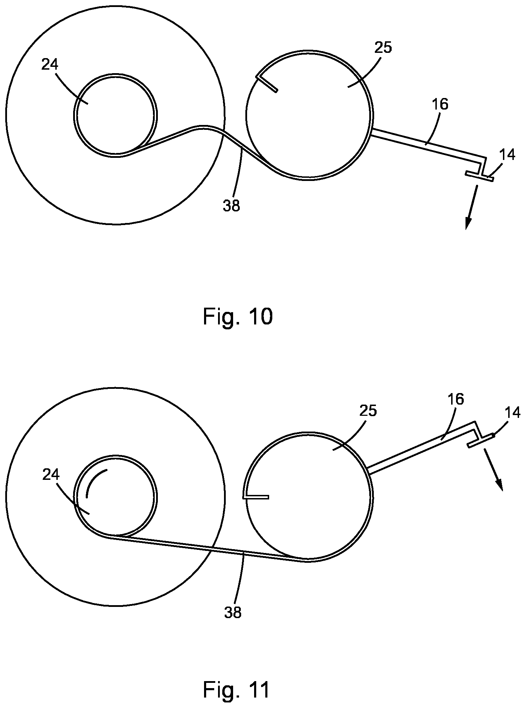

Im Folgenden soll unter Bezugnahme auf die Figuren 10 bis 16 auf eine exemplarische zweite Ausführungsform der Antriebseinheit 8 eingegangen werden, bei der der erste Stützabschnitt 4 und der zweite Stützabschnitt 10 insbesondere über ein Seilzug-Getriebe miteinander gekoppelt sind. Die folgenden Erläuterungen gelten zweckmäßigerweise für jede der beiden Antriebseinheiten 8 bzw. jeden der beiden Stützabschnitte 10.

Bei der zweiten Ausführungsform verfügt die Antriebseinrichtung, insbesondere die Antriebseinheit 8, über ein formweiches Verbindungselement 38, insbesondere ein Seil, Band, Schnur oder Filament. Beispielsweise ist das Verbindungselement 38 ein Textilseil (z.B. aus einer synthetischen Chemiefaser auf der Basis von Polyethylen mit insbesondere ultrahoher Molekülmasse, beispielsweise Dyneema), ein Stahlseil, oder Stahlband, eine Kunststoffschnur oder Monofilament (z.B. Angelsehne). Das Antriebselement 24 umfasst eine Antriebsrolle und das Abtriebselement 25 umfasst eine Abtriebsrolle. Mit dem Begriff "formweiches" Verbindungselement 38 ist insbesondere ein Verbindungselement gemeint, das nicht formstabil ist und/oder bereits durch die Schwerkraft seine Form ändert, also beispielsweise aufgrund der Schwerkraft nicht selbständig in einer sich vertikal nach oben erstreckenden Form bleibt.

Das formweiche Verbindungselement 38 ist insbesondere elastisch ausgeführt. Beispielsweise hat das formweiche Verbindungselement 38 ein E-Modul von kleiner als 1 GPa oder kleiner als 0,1 GPa. Durch Verwendung eines elastischen Verbindungselements 38 kann die Kraftübertragung des Exoskeletts 1 auf den Benutzer gedämpfter und angenehmer gestaltet werden. Mit abgeschaltetem Elektromotor 18 kann auf diese Weise eine passive Unterstützung bereitgestellt werden, mit dem Verbindungselement 38 als elastisches Antriebselement. Auf diese Weise können statische Haltungen in Vorbeuge rein mechanisch unterstützt werden, und zwar insbesondere in energieeffizientere Weise als mit aktivem Elektromotor 18.

Die Figuren 10 und 11 zeigen schematisch das Zusammenspiel zwischen dem Antriebselement 24, dem Abtriebselement 25, dem Verbindungselement 38, dem zweiten Kopplungsabschnitt 16 und der Bein-Auflage 14.

Das formweiche Verbindungselement 38 ist auf der Antriebsrolle und Abtriebsrolle um wenigstens einen Teil des jeweiligen Umfangs aufgewickelt. Vorzugsweise ist das Verbindungselement 38 auf der Antriebsrolle um mindestens eine Umdrehung oder mehr aufgewickelt und/oder auf der Abtriebsrolle um höchstens eine Umdrehung oder weniger aufgewickelt. Exemplarisch ist das Verbindungselement 38 an der Abtriebsrolle befestigt, insbesondere mit einem Ende.

Das Antriebselement 24 und das Abtriebselement 25 bilden eine Untersetzung, deren Untersetzungsfaktor vom Verhältnis der Durchmesser der Antriebsrolle und Abtriebsrolle bestimmt wird. Exemplarisch weist die Abtriebsrolle einen größeren Durchmesser auf als die Antriebsrolle.

Im Unterstützungsmodus ist das formweiche Verbindungselement 38 zwischen der Antriebsrolle und Abtriebsrolle gespannt, um eine Zugkraft von der Antriebsrolle auf die Abtriebsrolle zu übertragen und so die Drehbewegungskopplung bereitzustellen, exemplarisch nur in eine Drehrichtung. Dieser Zustand ist exemplarisch in der Figur 11 gezeigt. Der Elektromotor 18 versetzt das Antriebselement 24 in eine Antriebsbewegung, so dass das Verbindungselement 38 auf das Antriebselement 24 aufgewickelt wird und vom Abtriebselement 25 abgewickelt wird, wodurch das Abtriebselement 25 in eine Drehbewegung versetzt wird. Dadurch wird die Unterstützungskraft bzw. die relative Schwenkbewegung zwischen dem ersten Stützabschnitt 4 und dem zweiten Stützabschnitt 10 bewirkt.

Vorzugsweise wird durch die Steuereinheit 17 des Exoskeletts 1 das Drehmoment des Elektromotors 18 geregelt, beispielsweise indirekt über eine Stromregelung. Auf diese Weise kann ein sanfter Anlauf gewährleistet werden. Insbesondere wenn das Verbindungselement 38 beim Anlaufen des Motors nicht straff ist, kann so ein Ruck im Verbindungselement 38 im Moment des Straffziehens verhindert werden.

Über das formweiche Verbindungselement 38 ist nur eine Kraftübertragung in einer Richtung möglich, insbesondere eine Übertragung einer Zugkraft. In entgegengesetzter Richtung wird das formweiche Verbindungselement 38 zusammengeschoben; es findet keine Kraftübertragung statt. Folglich ergibt sich ein Freilauf in die Gegenrichtung zur Unterstützungskraft, also insbesondere für eine relative Schwenkbewegung zwischen den ersten Stützabschnitt 4 und dem zweiten Stützabschnitt 10, bei der der Beuge-Winkel 26 (vgl. Fig. 3) verkleinert wird.

Im Freilaufmodus ist gegenüber dem Unterstützungsmodus ein zusätzlicher Verbindungselement-Abschnitt von der Antriebsrolle abgewickelt, so dass dadurch die Drehbewegungskopplung in Bezug auf den Freilauf-Winkelbereich aufgehoben ist und die mittels der Benutzerkraft bewirkte relative Schwenkbewegung zwischen dem ersten Stützabschnitt 4 und dem zweite Stützabschnitt 10 ermöglicht wird (insbesondere in beide mögliche Schwenkrichtungen), ohne dass dabei das Antriebselement 24 durch das Abtriebselement 25 in die Drehbewegung versetzt wird. Dieser Zustand ist exemplarisch in der Figur 10 gezeigt. Das Abtriebselement 25 kann hier (durch eine entsprechende Schwenkbewegung des ersten Stützabschnitts 4) in eine rotative Bewegung (insbesondere in jede der beiden möglichen Drehrichtungen) versetzt werden, bei der das Verbindungselement 38 auf das Abtriebselement 25 aufgewickelt wird, ohne dass das Verbindungselement 38 von dem Antriebselement 24 abgewickelt wird, so dass das Antriebselement 24 durch die rotative Bewegung des Abtriebselements 25 nicht selbst in eine rotative Bewegung versetzt wird.

Wie vorstehend bereits erwähnt, dient der Freilaufmodus insbesondere dazu, dem Benutzer ein angenehmes Gehen zu ermöglichen. Hierbei benötigt der Benutzer des Exoskeletts 1 keine Unterstützungskraft und das Exoskelett 1 soll während der normalen Gehbewegung nicht behindern. Der Elektromotor 18 erzeugt im Freilaufmodus vorzugsweise keine Drehbewegung des Antriebselements 24 und/oder keine relative Schwenkbewegung zwischen dem ersten Stützabschnitt 4 und dem zweiten Stützabschnitt 10.

Wird der zweite Stützabschnitt 10 und das damit fest verbundene Abtriebselement 25 entgegen der Drehrichtung bewegt, die eine Zugkraft im formweichen Verbindungselement 38 entstehen lässt, spürt der Benutzer keinen Widerstand. Dies ist z.B. bei einem Schritt nach vorne der Fall.

Wird der zweite Stützabschnitt 10 und dadurch das Abtriebselement 25 in der Drehrichtung bewegt, die eine Zugkraft im formweichen Verbindungselement 38 entstehen lässt, spürt der Benutzer 2 bei der erstmaligen Durchführung einer solchen Bewegung den Widerstand des Antriebselements 24 (insbesondere aufgrund der Trägheit des Elektromotors 18). Das Antriebselement 24 wird dadurch in eine Drehbewegung versetzt, wodurch eine Abwicklung des formweichen Verbindungselements 38 vom Antriebselement 24 erfolgt. Dies ist z.B. dann der Fall, wenn der Benutzer beim Vorwärtsgehen sein betreffendes Bein 13 relativ zum Oberkörper 3 nach hinten bewegt - also wenn in der Vorwärtsbewegung das andere Bein nach vorne bewegt wird. Bei wiederholter Betätigung des zweiten Stützabschnitts 10 in diese Richtung spürt der Benutzer 2 keinen weiteren Widerstand, da das Verbindungselement 38 bereits ausreichend abgewickelt ist und der Elektromotor 18 somit nicht mehr gedreht wird.

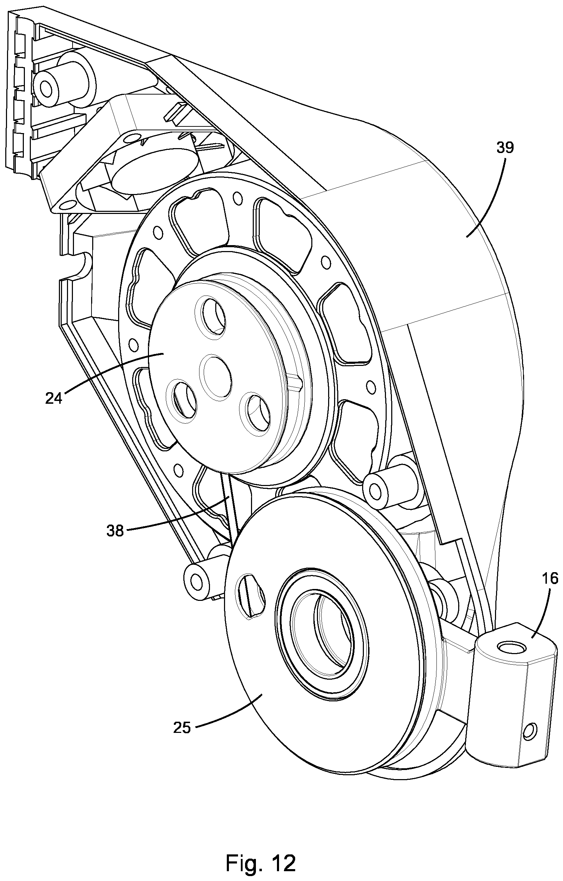

Die Figur 12 zeigt eine Antriebseinheit 8 mit geöffnetem Antriebseinheit-Gehäuse 39. Das Antriebselement 24 ist exemplarisch Teil des Rotors des Elektromotors 18 (oder stellt den Rotor des Elektromotors 18 dar) oder ist drehfest mit dem Rotor des Elektromotors 18 gekoppelt. Der zweiten Kopplungsabschnitt 16 ist drehfest an dem zweiten Abtriebselement 32 befestigt.

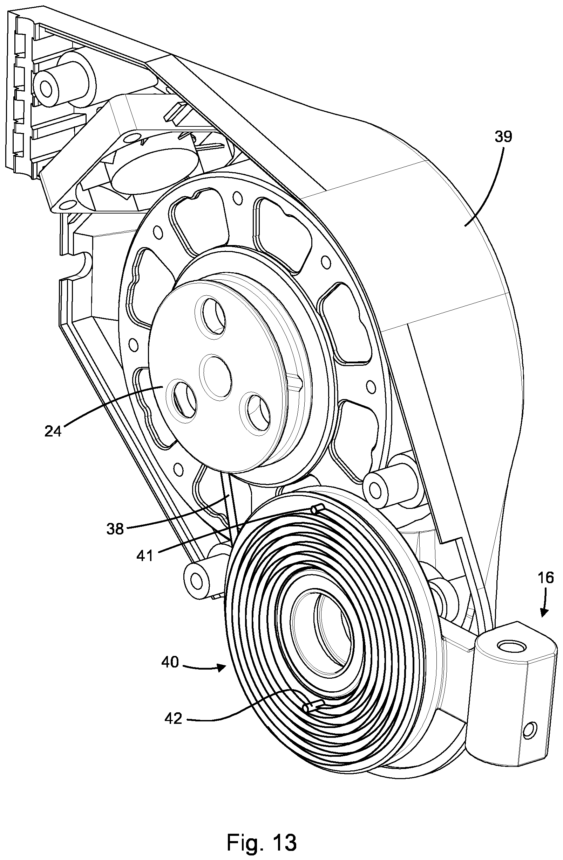

Bevorzugt verfügt das Exoskelett 1 über ein Federelement 40, das auf die Abtriebsrolle wirkt, um im Freilaufmodus eine Vorspannung des formweichen Verbindungselements zwischen der Antriebsrolle und der Antriebsrolle zu bewirken. Die Figur 13 zeigt eine exemplarische Ausgestaltung. Das Federelement 40 ist exemplarisch als Spiralfeder ausgeführt und insbesondere in dem Abtriebselement 25 integriert. Das Federelement 40 verfügt über ein erstes Ende 41, exemplarisch ein äußeres Ende, an dem das Abtriebselement 25 befestigt ist. Das Federelement 40 verfügt ferner über ein zweites Ende 42, exemplarisch ein inneres Ende, mit dem das Federelement 40 an dem Antriebseinheit-Gehäuse 39 befestigt ist. Das Federelement 40 beaufschlagt das Abtriebselement 25 mit einer Federkraft, die in eine Drehrichtung wirkt, in der das Abtriebselement 25 das Verbindungselement 38 aufwickelt.

Die Vorspannung verhindert ein unkontrolliertes Abwickeln des formweichen Verbindungselements 38 vom Antriebselement 24 und vom Abtriebselement 25. Dies hat den ersten Vorteil, dass ein Verfangen des abgewickelten Verbindungselements 38 in der Antriebseinheit 8 vermieden werden kann. Außerdem kann als zweiter Vorteil die Unterstützungskraft schneller wieder aufgebaut werden, da weniger Zeit zum Aufwickeln des abgewickelten Verbindungselements 38 auf das Antriebselement 24 benötigt wird. Die Kraft des Federelements 40 ist derart gewählt, dass der Benutzer keinen oder nur minimalen Widerstand in der Gehbewegung spürt. Das Federelement 40 kann beispielsweise als Blattfeder ausgeführt sein.

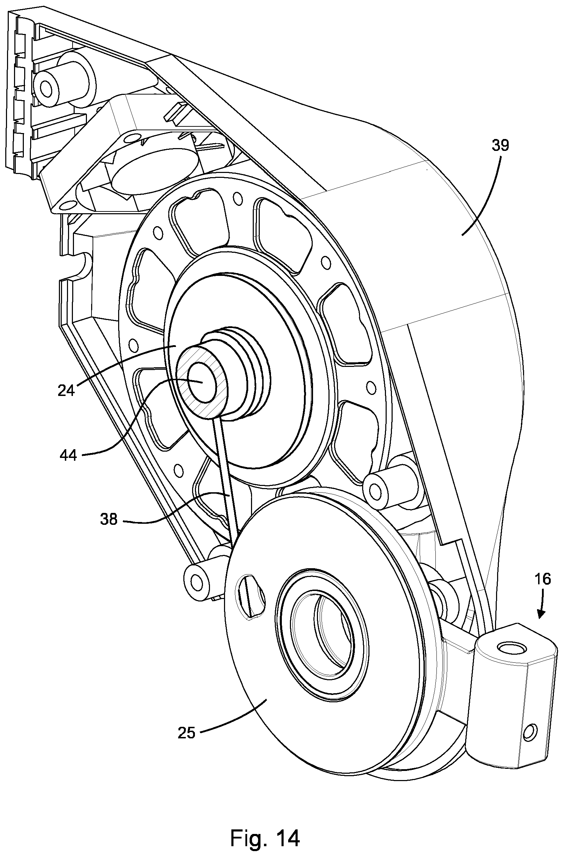

Gemäß einer möglichen Ausgestaltung verfügt das Antriebselement 24 über eine helix- oder schneckenförmige Verbindungselement-Aufnahmestruktur 44, auf der das Verbindungselement 38 aufgewickelt ist und die dazu dient, zu vermeiden, dass sich das Verbindungselement 38 beim Aufwickeln auf das Antriebselement 24 und Abwickeln von dem Antriebselement 24 an sich selbst reibt. In der Figur 14 ist die Verbindungselement-Aufnahmestruktur 44 schematisch gezeigt. Die Verbindungselement-Aufnahmestruktur 44 ist insbesondere als schneckenförmige Winde ausgeführt. Das Verbindungselement 38 wird auf der Verbindungselement-Aufnahmestruktur 44 insbesondere helixförmig aufgewickelt.

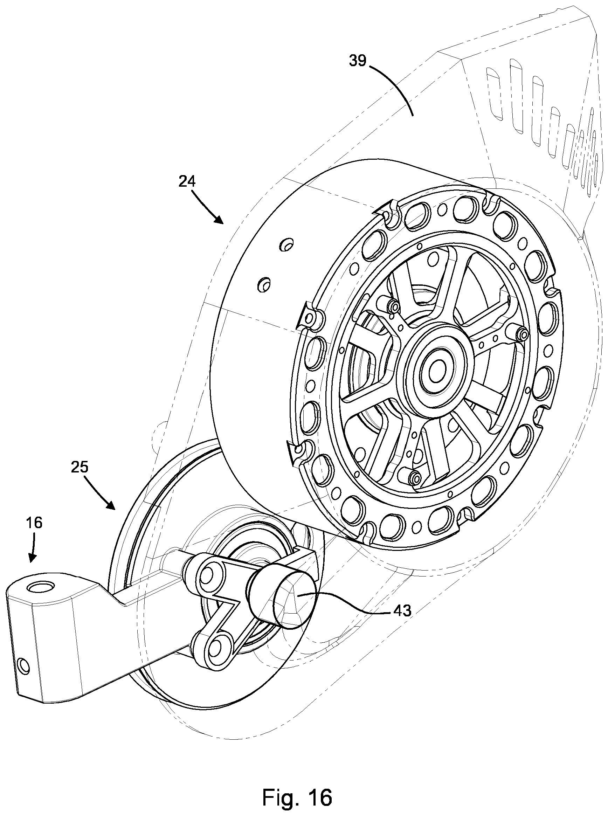

Bevorzugt umfasst das Exoskelett 1 einen Bewegungssensor 43, beispielsweise einen Drehwinkelsensor, zur Erfassung einer Drehbewegung des Abtriebselements 25. Ein exemplarischer Bewegungssensor 43 ist in der Figur 16 gezeigt. Die Antriebseinrichtung ist vorzugsweise ausgebildet, im Freilauf-Modus das Antriebselement 24 auf Basis der erfassten Drehbewegung anzutreiben, derart, dass in Ansprechen auf eine erfasste Drehbewegung des Abtriebselements 25 in eine Abwickel-Drehrichtung, in der das Verbindungselement 38 von dem Abtriebselement 25 abgewickelt wird, das Verbindungselement 38 auf das Antriebselement 24 aufgewickelt wird. Zweckmäßigerweise ist die Antriebseinrichtung ausgebildet, im Freilauf-Modus das Antriebselement 24 auf Basis der erfassten Drehbewegung anzutreiben, derart, dass in Ansprechen auf eine erfasste Drehbewegung des Abtriebselements 25 in eine Aufwickel-Drehrichtung, in der das Verbindungselement 38 von dem Abtriebselement 25 aufgewickelt wird, das Verbindungselement 38 von dem Antriebselement 24 abgewickelt wird.

Das Antriebselement 24 wird also (auf Basis der erfassten Drehbewegung des Abtriebselements 25) insbesondere so (mittels des Elektromotors 18) angetrieben, dass es sich in die gleiche Drehrichtung wie das Abtriebselement 25 dreht. Insbesondere ist die Antriebseinrichtung ausgebildet, im Freilauf-Modus das Antriebselement 24 auf Basis der erfassten Drehbewegung derart anzutreiben, dass das Verbindungselement 38 durch das Antriebselement 24 auf einer Vorspannung gehalten wird. Auf diese Weise kann ein unkontrolliertes Abwickeln des formweichen Verbindungselements 38 vom Antriebselement 24 und vom Abtriebselement 25 verhindert werden.

Die nachstehend diskutierten Ausgestaltungen können insbesondere bei jeder der beiden vorstehend diskutierten Ausführungsformen realisiert sein.

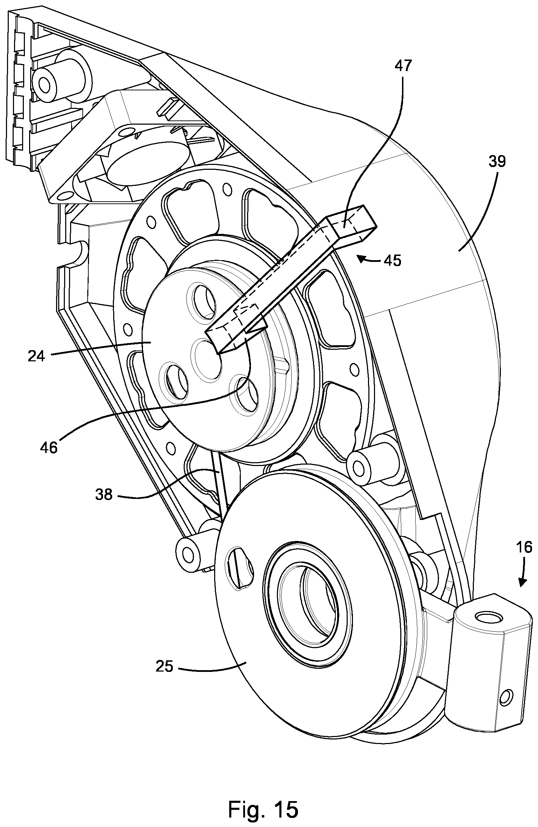

Gemäß einer möglichen Ausgestaltung umfasst das Exoskelett eine mechanische Bremseinrichtung 45, mittels der das Antriebselement 24 und/oder das Abtriebselement 25 und/oder das zweite Abtriebselement 32 gebremst und/oder vollständig blockiert werden kann. Die Figur 15 zeigt eine exemplarische Ausgestaltung des Exoskeletts 1 mit einer solchen Bremseinrichtung.

Exemplarisch verfügt die Bremseinrichtung 45 einen Bremsabschnitt 46, beispielsweise eine Schräge, die gegen das Antriebselement 24 gedrückt werden kann, um das Antriebselement 24 zu blockieren, so dass es sich nicht mehr rotativ (um seine eigene Drehachse) bewegen kann. Alternativ kann die Bremseinrichtung für das Abtriebselement 25 oder das zweite Abtriebselement 32 vorgesehen sein. Die Bremseinrichtung 45 verfügt zweckmäßigerweise über einen Bedienabschnitt 47, der von dem Benutzer betätigt, insbesondere gedrückt werden kann, um die Bremseinrichtung 45 in einen Bremszustand zu versetzen, in dem der Bremsabschnitt 46 gegen das Antriebselement 24 (oder das Abtriebselement 25 oder das zweite Abtriebselement 32) gedrückt wird. Bevorzugt rastet die Bremseinrichtung 45 in den Bremszustand ein und es ist insbesondere eine weitere Betätigung des Bedienabschnitts 47 erforderlich, um den Bremszustand zu beenden. Beispielsweise ist eine Feder vorhanden, durch die die Bremseinrichtung 45 bei der erneuten Betätigung aus dem Bremszustand zurückschnappt. Mittels der Bremseinrichtung 45 kann insbesondere die Haltearbeit reduziert werden, welche der Elektromotor 18 in statischen Vorbeugehaltungen leisten muss.

Gemäß einer weiteren Ausgestaltung kann die Bremseinrichtung 45 elektronisch gesteuert aktiviert werden.

Gemäß einer möglichen Ausgestaltung ist das Antriebselement 24, das Abtriebselement 25 und/oder das zweite Abtriebselement 32 mit einem ungleichmäßigen Durchmesser ausgeführt, um eine mit dem ersten Stützabschnitt 4 bereitgestellte Unterstützungskraft - insbesondere die Zugkraft 27 - in Abhängigkeit der Stellung des Antriebselements 24, Abtriebselements 25 und/oder zweiten Abtriebselements 32 zu variieren. Insbesondere kann durch Verwendung von Geometrien mit ungleichmäßigen Durchmessern ein Verlauf des Untersetzungsverhältnis über den Bewegungsbereich realisiert werden. Dies kann beispielsweise mit elliptischen Zahnrädern oder Seilrollen umgesetzt werden. Die Übertragungselemente - also das Antriebselement 24, Abtriebselement 25 und/oder zweite Abtriebselement 32 - könnten dabei so gestaltet sein, dass beispielsweise bei einer Hebebewegung die größte Unterstützungskraft bei der typischerweise größten erreichten Oberkörpervorneigung erreicht wird.

Gemäß einer möglichen Ausgestaltung ist im Unterstützungsmodus zwischen dem Antriebselement und dem Abtriebselement eine Übersetzung oder eine Untersetzung gegeben.

## Patentansprüche

1. Exoskelett (1), insbesondere Rücken-Exoskelett zur Unterstützung einer mit dem Oberkörper (3) durchgeführten Hebebewegung, umfassend einen ersten Stützabschnitt (4) zur Unterstützung eines ersten Körperteils, insbesondere des Oberkörpers (3), und einen zweiten Stützabschnitt (10) zur Abstützung des Exoskeletts (1) an einem zweiten Körperteil, insbesondere einem Bein (13), sowie eine Antriebseinrichtung zur Bereitstellung einer relativen Unterstützungs-Schwenkbewegung zwischen dem ersten Stützabschnitt (4) und dem zweiten Stützabschnitt (10), wobei das Exoskelett (1) über einen Unterstützungsmodus und einen Freilaufmodus verfügt und die Antriebseinrichtung ausgebildet ist, im Unterstützungsmodus ein Antriebsdrehmoment bereitzustellen und durch eine mechanische Drehbewegungskopplung zwischen einem Antriebselement (24) und einem Abtriebselement (25) das Antriebsdrehmoment in die relative Unterstützungs-Schwenkbewegung umzusetzen, und im Freilaufmodus die mechanische Drehbewegungskopplung zwischen dem Antriebselement (24) und dem Abtriebselement (25) in Bezug auf einen Freilauf-Winkelbereich aufzuheben, so dass innerhalb des Freilauf-Winkelbereichs eine mittels einer Benutzerkraft bewirkte relative Schwenkbewegung zwischen dem ersten Stützabschnitt (4) und dem zweite Stützabschnitt (10) ermöglicht wird, ohne dass dabei das Antriebselement (24) durch das Abtriebselement (25) in eine Drehbewegung versetzt wird.

2. Exoskelett (1) nach Anspruch 1, wobei das Exoskelett (1) ein Rücken-Exoskelett ist, der erste Stützabschnitt (4) zur Unterstützung des Oberkörpers (3) und der zweite Stützabschnitt (10) zur Abstützung an einem Bein (13) dient und der Freilauf-Winkelbereich derart ausgelegt ist, dass ein Benutzer (2) des Rücken-Exoskeletts (1) im Freilauf-Modus mit wenigstens einem Bein (13) einen kompletten Schrittzyklus durchführen kann, ohne dass dabei aufgrund einer durch den Schrittzyklus bewirkten relativen Schwenkbewegung zwischen dem ersten Stützabschnitt (4) und dem zweiten Stützabschnitt (10) das Antriebselement (24) durch das Abtriebselement (25) in eine Drehbewegung versetzt wird.

3. Exoskelett (1) nach einem voranstehenden Anspruch, wobei das Abtriebselement (25) in eine Freilauf-Stellung versetzbar ist, um dadurch die die Drehbewegungskopplung in Bezug auf den Freilauf-Winkelbereich aufzuheben, wobei das Abtriebselement (25) durch eine mittels einer Benutzerkraft bewirkte relative Schwenkbewegung zwischen dem ersten Stützabschnitt (4) und dem zweiten Stützabschnitt (10) in die Freilauf-Stellung versetzbar ist.

4. Exoskelett (1) nach einem voranstehenden Anspruch, wobei das Exoskelett (1) ausgebildet ist, zu detektieren, ob eine dem Unterstützungsmodus oder dem Freilaufmodus zugeordnete Anwendungssituation vorliegt und auf Basis dieser Detektion die Bereitstellung des Antriebsdrehmoments zu steuern.

5. Exoskelett (1) nach einem der voranstehenden Ansprüche, wobei das Antriebselement (24) und das Abtriebselement (25) zusammen eine mechanische Kupplung bilden, die wenigstens einen Eingriffsabschnitt (31) und wenigstens zwei Endanschläge (33) umfasst, zwischen denen eine Kreisbogenbahn (36) definiert ist, entlang der der Eingriffsabschnitt (31) relativ zu den Endanschlägen (33) bewegbar ist, wobei die Kupplung in einen Übertragungszustand versetzbar ist, in dem der Eingriffsabschnitt (31) in Eingriff mit dem einen oder dem anderen der beiden Endanschläge (33) steht, um die Drehbewegungskopplung bereitzustellen, und in einen Freilaufzustand versetzbar ist, in dem der Eingriffsabschnitt von beiden Endanschlägen beabstandet und entlang der Kreisbogenbahn bewegbar ist, um die mechanische Drehbewegungskopplung zwischen dem Antriebselement (24) und dem Abtriebselement (25) in Bezug auf den Freilauf-Winkelbereich aufzuheben, wobei der Freilauf-Winkelbereich durch die Länge der Kreisbogenbahn definiert ist.

6. Exoskelett (1) nach Anspruch 5, wobei das Abtriebselement (25) ein erstes Abtriebselement ist und die Antriebseinrichtung ferner ein mit dem ersten Abtriebselement (25) in Eingriff stehendes zweites Abtriebselement (32) umfasst und ausgebildet ist, im Unterstützungsmodus die Unterstützungs-Schwenkbewegung dadurch bereitzustellen, dass das Antriebsdrehmoment mittels der mechanischen Kupplung von dem Antriebselement (24) auf das erste Abtriebselement (25) übertragen wird und durch den Eingriff des ersten Abtriebselements (25) mit dem zweiten Abtriebselement (32) in die Unterstützungs-Schwenkbewegung umgesetzt wird.

7. Exoskelett (1) nach Anspruch 6, wobei das erste Abtriebselement (25) ein erstes Zahnrad ist und das zweite Abtriebselement (32) ein zweites Zahnrad ist.

8. Exoskelett (1) nach Anspruch 7, wobei das zweite Zahnrad nur entlang eines Kreisbogens eine Verzahnung aufweist, so dass nur innerhalb des Winkelbereichs dieses Kreisbogens die Umsetzung des Antriebsdrehmoments in die Unterstützungs-Schwenkbewegung erfolgt.

9. Exoskelett (1) nach einem der Ansprüche 6 bis 8, wobei das Exoskelett (1) über eine Sensoreinrichtung (37) zur Erfassung einer Drehbewegung des zweiten Abtriebselements (32) verfügt, und die Antriebseinrichtung ausgebildet ist, im Freilauf-Modus das Antriebselement (24) auf Basis der erfassten Drehbewegung anzutreiben, derart, dass der Eingriffsabschnitt (31) auf Abstand zu den Endanschlägen (33) gehalten wird.

10. Exoskelett (1) nach einem der Ansprüche 1 bis 4, wobei die Antriebseinrichtung über ein formweiches Verbindungselement (38), insbesondere ein Seil, Band, Schnur oder Filament, verfügt, und das Antriebselement (24) eine Antriebsrolle und das Abtriebselement (25) eine Abtriebsrolle umfasst, wobei das formweiche Verbindungselement (38) auf der Antriebsrolle und Abtriebsrolle um wenigstens einen Teil des jeweiligen Umfangs aufgewickelt ist, im Unterstützungsmodus zwischen der Antriebsrolle und Abtriebsrolle gespannt ist, um eine Zugkraft von der Antriebsrolle auf die Abtriebsrolle zu übertragen und so die Drehbewegungskopplung bereitzustellen, und im Freilaufmodus gegenüber dem Unterstützungsmodus ein zusätzlicher Verbindungselement-Abschnitt von der Antriebsrolle abgewickelt ist, so dass dadurch die Drehbewegungskopplung in Bezug auf den Freilauf-Winkelbereich aufgehoben ist und die mittels der Benutzerkraft bewirkte relative Schwenkbewegung zwischen dem ersten Stützabschnitt (4) und dem zweite Stützabschnitt (10) ermöglicht wird, ohne dass dabei das Antriebselement (24) durch das Abtriebselement (25) in die Drehbewegung versetzt wird.

11. Exoskelett (1) nach Anspruch 10, wobei die Antriebseinrichtung über ein Federelement (40) verfügt, das auf die Abtriebsrolle wirkt, um im Freilaufmodus eine Vorspannung des formweichen Verbindungselements (38) zwischen der Antriebsrolle und der Antriebsrolle zu bewirken.

12. Exoskelett (1) nach Anspruch 10 oder 11, ferner umfassend einen Bewegungssensor (43) zur Erfassung einer Drehbewegung des Abtriebselements (25), wobei die Antriebseinrichtung ausgebildet ist, im Freilauf-Modus das Antriebselement (24) auf Basis der erfassten Drehbewegung anzutreiben, derart, dass in Ansprechen auf eine erfasste Drehbewegung des Abtriebselements (25) in eine Abwickel-Drehrichtung, in der das Verbindungselement (38) von dem Abtriebselement abgewickelt wird, das Verbindungselement (38) auf das Antriebselement (24) aufgewickelt wird, und/oder in Ansprechen auf eine erfasste Drehbewegung des Abtriebselements (25) in eine Aufwickel-Drehrichtung, in der das Verbindungselement (38) von dem Abtriebselement (25) aufgewickelt wird, das Verbindungselement (38) von dem Antriebselement abgewickelt wird.

13. Exoskelett (1) nach Anspruch 12, wobei die Antriebseinrichtung ausgebildet ist, im Freilauf-Modus das Antriebselement (24) auf Basis der erfassten Drehbewegung derart anzutreiben, dass das Verbindungselement (38) durch das Antriebselement (24) auf einer Vorspannung gehalten wird.

14. Exoskelett (1) nach einem der Ansprüche 10 bis 13, wobei das formweiche Verbindungselement (38) elastisch ausgeführt ist.

15. Exoskelett (1) nach einem der Ansprüche 10 bis 14, wobei das Antriebselement (24) über eine helix- oder schneckenförmige Verbindungselement-Aufnahmestruktur (44) verfügt, auf der das Verbindungselement (38) aufgewickelt ist und die dazu dient, zu vermeiden, dass sich das Verbindungselement (38) beim Aufwickeln auf das Antriebselement (24) und Abwickeln von dem Antriebselement (24) an sich selbst reibt.

16. Exoskelett (1) nach einem der voranstehenden Ansprüche, ferner umfassend eine mechanische Bremseinrichtung (45), mittels der das Antriebselement (24) und/oder das Abtriebselement (25) und/oder ein/das zweite Abtriebselement (32) gebremst und/oder vollständig blockiert werden kann.

17. Exoskelett (1) nach einem der voranstehenden Ansprüche, wobei das Antriebselement (24), das Abtriebselement (25) und/oder ein/das zweite Abtriebselement (32) mit einem ungleichmäßigen Durchmesser ausgeführt ist, um eine mit dem Unterstützungsabschnitt bereitgestellte Unterstützungskraft in Abhängigkeit der Stellung des Antriebselements (24), Abtriebselements (25) und/oder zweiten Abtriebselements (32) zu variieren.

18. Exoskelett (1) nach einem der voranstehenden Ansprüche, wobei im Unterstützungsmodus zwischen dem Antriebselement (24) und dem Abtriebselement (25) oder zwischen dem Abtriebselement (25) und einem/dem zweiten Abtriebselement (32) eine Übersetzung oder eine Untersetzung gegeben ist.

19. Verfahren zum Betrieb eines Exoskeletts (1) nach einem der voranstehenden Ansprüche, umfassend die Schritte:
- Betreiben des Exoskeletts (1) im Unterstützungsmodus, in dem die Antriebseinrichtung das Antriebsdrehmoment bereitstellt und durch die mechanische Drehbewegungskopplung zwischen dem Antriebselement (24) und dem Abtriebselement (25) in die relative Unterstützungs-Schwenkbewegung umsetzt,
- Versetzen des Exoskeletts (1) in den Freilaufmodus, und
- Betreiben des Exoskeletts (1) im Freilaufmodus, in dem die mechanische Drehbewegungskopplung zwischen dem Antriebselement (24) und dem Abtriebselement (25) in Bezug auf den Freilauf-Winkelbereich aufgehoben ist, wobei innerhalb des Freilauf-Winkelbereichs die mittels der Benutzerkraft bewirkte relative Schwenkbewegung zwischen dem ersten Stützabschnitt (4) und dem zweite Stützabschnitt (10) durchgeführt wird, ohne dass dabei das Antriebselement (24) durch das Abtriebselement (25) in eine Drehbewegung versetzt wird.
